# EUROPÄISCHE PATENTSCHRIFT

(11) **EP 4 047 244 B1**
(45) Veröffentlichungstag und Bekanntmachung des Hinweises auf die Patenterteilung: **22.11.2023**
(21) Anmeldenummer: 22156769.6
(22) Anmeldetag: 15.02.2022
(51) Int. Cl.: F16H 57/04

(54) **ÖLSYSTEM FÜR EIN GETRIEBE, GETRIEBE MIT DEM ÖLSYSTEM SOWIE LUFTFAHRZEUG MIT DEM ÖLSYSTEM UND/ODER DEM GETRIEBE**
OIL SYSTEM FOR A TRANSMISSION, TRANSMISSION WITH THE OIL SYSTEM AND AIRCRAFT WITH THE OIL SYSTEM AND / OR THE TRANSMISSION
SYSTÈME D'HUILE POUR UNE TRANSMISSION, TRANSMISSION DOTÉ DU SYSTÈME D'HUILE, AINSI QU'AÉRONEF DOTÉ DU SYSTÈME D'HUILE ET/OU DE LA TRANSMISSION

(30) Priorität: 17.02.2021 DE 102021201491
(43) Veröffentlichungstag der Anmeldung: 24.08.2022
(73) Patentinhaber: Airbus Helicopters Technik GmbH, 34379 Calden (DE)
(72) Erfinder: Rösener, Timm, 34260 Kaufungen (DE); Lieder, Sergej, 34123 Kassel (DE)
(74) Vertreter: GPI Brevets

(56) Entgegenhaltungen:
- US-A- 4 844 202
- US-A1- 2005 217 830
- US-B2- 10 337 607

## Beschreibung

Die Erfindung betrifft ein Ölsystem für ein Getriebe mit den Merkmalen des Anspruchs 1. Ferner betrifft die Erfindung ein Getriebe mit dem Ölsystem sowie ein Luftfahrzeug mit dem Ölsystem oder dem Getriebe.

Getriebe, insbesondere Hubschraubergetriebe, unterliegen in der Regel hohen Belastungen, weshalb die Getriebekomponenten zur Schmierung und Kühlung mit einem Getriebeöl versorgt werden. Das Getriebe weist hierzu einen Ölkreislauf auf, wobei über den Ölkreislauf Heißöl aus dem Getriebe zu einem Ölkühler gefördert wird. Das Heißöl gibt dabei in dem Ölkühler die Wärme über eine geeignete Wärmetauscherstruktur ab und wird anschließend wieder dem Getriebe als Kühlöl zugeführt. Die Druckschrift US 4 844 202 A offenbart ein Schmiersystem für ein Getriebe mit einer mit einer Schmiermittelpumpe verbundenen Auslassleitung, die einen Schmiermittelpumpenstrom zu einer externen Wärmetauschereinheit leitet, wobei der Schmiermittelpumpenstrom von der Wärmetauschereinheit über einen Durchflusskanal zu einem Filter verläuft, welcher mit einer weiteren Auslassleitung verbunden ist. Das Schmiermittelsystem weist zudem ein Filter-Bypassventil zur Umgehung des Filters auf, welches ebenfalls mit der weiteren Auslassleitung strömungstechnisch in Verbindung steht. Auch die Druckschrift US 10 337 607 B offenbart ein Ölsystem für ein Getriebe.

Beispielsweise offenbart die Druckschrift EP 3194791 A1 eine Getriebeanordnung, umfassend ein Getriebe, eine Antriebswelle, die angeordnet ist, um durch das Getriebe angetrieben zu werden, und eine Antriebswellenkupplung, die die Antriebswelle und das Getriebe koppelt. Ferner weist die Getriebeanordnung eine Getriebeölkühlanordnung zum Kühlen des Getriebes auf, wobei die Getriebeölkühlanordnung einen Wärmetauscher zum Aufnehmen und Kühlen eines Öls aus dem Getriebe aufweist. Ferner umfasst die Getriebeölkühlanordnung ein erstes und ein zweites Rohr auf, wobei das Öl innerhalb des ersten Rohres zu dem Wärmetauscher geleitet wird und das Öl innerhalb des zweiten Rohres zu dem Getriebe zurückgebracht wird. Dabei sind das erste und das zweite Rohr an einer inneren Stelle relativ zu dem Getriebe und dem Wärmetauscher angeordnet.

Der Erfindung liegt die Aufgabe zugrunde, ein Ölsystem für ein Getriebe vorzuschlagen, welches sich durch eine hohe Betriebssicherheit und eine zuverlässige Ölversorgung auszeichnet. Ferner ist es eine Aufgabe der Erfindung ein entsprechendes Getriebe mit dem Ölsystem sowie ein Luftfahrzeug mit dem Ölsystem oder dem Getriebe vorzuschlagen.

Diese Aufgabe wird durch ein Ölsystem mit den Merkmalen des Anspruchs 1, ein Getriebe mit den Merkmalen des Anspruchs 10 sowie ein Luftfahrzeug mit den Merkmalen des Anspruchs 11 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Ölsystem, welches für ein Getriebe ausgebildet und/oder geeignet ist. Bevorzugt ist das Getriebe als ein Hubschraubergetriebe ausgebildet, wobei das Getriebe insbesondere zur Übersetzung eines Antriebsmoments von einem oder mehreren Triebwerk/en und/oder auf mindestens einen Rotor eines Hubschraubers dient. Das Ölsystem dient dazu, um das Getriebe, insbesondere einzelne Getriebekomponenten, mit einem schmierenden und kühlenden Getriebeöl zu versorgen.

Hierzu weist das Ölsystem mindestens oder genau einen Heißölkanal zur Führung von Heißöl und mindestens oder genau einen Kühlölkanal zur Führung von Kühlöl auf. Der Heißölkanal und der Kühlölkanal sind Teil eines Ölkreislaufes, wobei das Getriebeöl in einem Betriebszustand durch den Heißölkanal und den Kühlölkanal zirkuliert. Insbesondere wird das Heißöl über den Heißölkanal aus dem Getriebe gefördert, gekühlt und als Kühlöl über den Kühlölkanal wieder dem Getriebe zugeführt.

Der mindestens eine Heißölkanal und/oder der mindestens eine Kühlölkanal können durch separate Leitungen, Rohre oder dergleichen gebildet sein. Bevorzugt sind der Kühlölkanal und der Heißölkanal jedoch in ein oder mehrere Gehäuseabschnitte des Getriebes integriert. Beispielsweise können der Heißölkanal und/oder der Kühlölkanal durch ein oder mehrere Bohrungen gebildet sein. Optional weist das Ölsystem mindestens eine Ölpumpe auf, welche ausgebildet ist, das Heißöl und das Kühlöl zu befördern, wobei die Ölpumpe wahlweise an den Heiß- oder Kühlölkanal strömungstechnisch angebunden ist.

Das Ölsystem weist eine Verteilungsvorrichtung auf, welche zur Verteilung von Kühlöl in dem Getriebe ausgebildet und/oder geeignet ist und strömungstechnisch mit dem Kühlölkanal verbunden ist. Insbesondere dient die Verteilungsvorrichtung zur gezielten Verteilung des Kühlöls innerhalb des Getriebes. Bevorzugt wird ein Hauptvolumenstrom des Kühlöls durch die Verteilungsvorrichtung in mehrere Teilvolumenströme aufgeteilt. Die Verteilungsvorrichtung umfasst vorzugsweise einen oder mehrere Sammelbereich, wobei der Kühlölkanal in dem Sammelbereich endet und sich ausgehend von dem Sammelbereich mehrere Verteilungskanäle erstrecken, um das Kühlöl gezielt an unterschiedliche Kühl- und Schmierstellen in dem Getriebe zu leiten.

Das Ölsystem weist einen oder mehrere Ölkühleranschlüsse auf, welche zum Anschluss einer oder mehrerer Ölkühlervorrichtungen ausgebildet und/oder geeignet ist. Die Ölkühlervorrichtung dient zur Kühlung des Heißöls, wobei das Heißöl in der Ölkühlervorrichtung gekühlt bzw. thermische Energie entzogen wird und dem Ölsystem wieder als Kühlöl bereitgestellt wird. Hierzu ist die Ölkühlervorrichtung in dem Kühlkreislauf zwischen dem Heißölkanal und dem Kühlölkanal strömungstechnisch eingebunden, sodass der Hauptvolumenstrom des Getriebeöls über die Ölkühlervorrichtung verläuft. Vorzugsweise ist die Ölkühlervorrichtung als ein Wärmetauscher ausgebildet.

Der Ölkühleranschluss weist eine mit dem Heißölkanal in Verbindung stehende Austrittsschnittstelle zum Austritt des Heißöls aus dem Getriebe sowie eine mit dem Kühlölkanal in Verbindung stehende Eintrittsschnittstelle zum Eintritt des Kühlöls in das Getriebe auf. Bevorzugt weist die Ölkühlervorrichtung einen Öleinlass und einen Ölauslass auf, wobei die Ölkühlervorrichtung über den Öleinlass an die Austrittsschnittstelle und über den Ölauslass an die Eintrittsschnittstelle anschließbar und/oder angeschlossen ist. Vorzugsweise sind die Eintrittsschnittstelle und die Austrittsschnittstelle benachbart zueinander und/oder auf einer gemeinsamen Seite des Getriebes, insbesondere des Gehäuseabschnitts, angeordnet.

Im Rahmen der Erfindung wird vorgeschlagen, dass zwischen der Verteilungsvorrichtung und der Eintrittsschnittstelle eine Filtervorrichtung angeordnet ist, welche zur Filtrierung von in dem Kühlöl angeordneten Fremdpartikeln ausgebildet und/oder geeignet ist. Insbesondere dient die Filtervorrichtung dazu, etwaige in den Ölkreislauft gelangte Verunreinigungen aus dem Kühlöl herauszufiltern, welche ein mögliches Zusetzen und/oder Blockieren des Kühlölkanals und/oder der Verteilungskanäle verursachen können. Vorzugsweise trennt die Filtervorrichtung eine Rohseite von einer Reinseite, wobei die Eintrittsschnittstelle auf der Rohseite und die Verteilungsvorrichtung auf der Reinseite angeordnet ist. Besonders bevorzugt ist die Filtervorrichtung unmittelbar nach der Eintrittsschnittstelle oder zumindest Nahe der Eintrittsschnittstelle angeordnet, sodass die Fremdpartikel direkt nach dem Austritt aus der Ölkühlervorrichtung und/oder beim Eintritt in das Getriebe gefiltert werden.

Durch die Anordnung der Filtervorrichtung zwischen Eintrittsschnittstelle und Verteilungsvorrichtung kann sichergestellt werden, dass eventuell in dem Kühlöl angeordnete Fremdpartikel frühzeitig aus dem Kühlöl herausgefiltert werden können. Des Weiteren kann durch die Filtervorrichtung ein Zusetzen der Ölverteilungsvorrichtung bzw. deren Verteilungskanäle verhindert werden. Somit kann die Betriebssicherheit des Getriebes gewährleistet und eine Beschädigung der Getriebekomponenten aufgrund einer mangelnden Ölversorgung verhindert werden.

Erfindungsgemäß ist vorgesehen, dass die Filtervorrichtung ein Filtersieb aufweist, welches in dem Kühlölkanal angeordnet ist. Insbesondere ist das Filtersieb derart ausgebildet, dass das Kühlöl ungehindert das Filtersieb passieren kann und mitgeführte Fremdpartikel durch das Filtersieb zurückgehalten werden. Bevorzugt ist das Filtersieb als ein separater Siebeinsatz ausgebildet, welcher form- und/oder kraftschlüssig in dem Kühlölkanal montiert ist. Bevorzugt ist das Filtersieb auswechselbar, sodass das Filtersieb beispielsweise im Rahmen von Wartungs- und/oder Reparaturarbeiten ersetzt werden kann. Durch das Filtersieb wird eine besonders einfache und kostengünstige Ausgestaltung der Filtervorrichtung vorgeschlagen, welche zudem in einfacher Weise in das Ölsystem integriert werden kann.

In einer Konkretisierung ist vorgesehen, dass das Filtersieb als ein Grobsieb mit einer Maschenweite von kleiner als 0,8 mm ausgebildet ist. Insbesondere dient das Filtersieb zur Filtrierung von Fremdpartikeln mit einem Durchmesser von mehr als 0,4 mm, vorzugsweise mehr 0,6 mm, im Speziellen mehr als 0,8 mm. Alternativ oder optional ergänzend weist das Filtersieb eine Maschenweite von kleiner als 0,4 mm, vorzugsweise kleiner als 0,6 mm, im Speziellen kleiner als 0,8 mm auf. Bevorzugt weist der Kühlölkanal und/oder die Verteilungskanäle einen Öffnungsdurchmesser von größer als 0,8 mm, vorzugsweise größer als 1 mm, im Speziellen von größer als 1,5 mm auf. Bevorzugt kann die Maschenweite des Filtersiebs in Abhängigkeit des Öffnungsdurchmessers des Kühlölkanals und/oder der Verteilungskanäle derart dimensioniert werden, sodass ein Verstopfen der Kanäle verhindert wird und der Filtersieb zugleich einen geringen Strömungswiderstand für das Öl bildet. Besonders bevorzugt sind die Eintrittsschnittstelle und/oder der Kühlölkanal vor der Filtervorrichtung ausreichend groß dimensioniert, sodass ein Verstopfen durch die Fremdpartikel verhindert wird.

Erfindungsgemäß ist vorgesehen, dass die Filtervorrichtung einen Bypass aufweist, welcher zur Überbrückung des Filtersiebs ausgebildet und/oder geeignet ist. Insbesondere hat der Bypass die Funktion eine Durchlässigkeit für das Kühlöl bei einem einer reduzierten Durchlässigkeit des Filtersiebs und/oder einem hohen Differenzdruck zwischen Rohseite und Reinseite zu gewährleisten. Beispielsweise kann der Strömungswiderstand dadurch ansteigen, dass sich das Filtersieb durch die herausgefilterten Fremdpartikel allmählich zusetzt und/oder das Öl in Abhängigkeit der Temperatur eine erhöhte Viskosität, z.B. bei einer Kaltstartphase, aufweist. Prinzipiell kann der Bypass durch einen separaten Bypasskanal gebildet sein, welcher an der Stelle der Filtervorrichtung, insbesondere des Filtersiebes, parallel zu dem Kühlölkanal verläuft. Bevorzugt jedoch ist der Bypass in die Filtereinrichtung, insbesondere in das Filtersieb, integriert, wobei der Hauptvolumenstrom wahlweise über das Filtersieb oder über den Bypass zu der Verteilungsvorrichtung strömen kann.

Gemäß dieser Ausführung ist der Bypass in Abhängigkeit eines Strömungswiderstandes zwischen einem Sperr- und einem Freigabezustand schaltbar. In dem Sperrzustand ist der Bypass gesperrt, sodass der Hauptvolumenstrom ausschließlich oder zumindest größtenteils über das Filtersieb verläuft. Bevorzugt ist der Sperrzustand geschaltet, wenn der Strömungswiderstand gering bzw. die Filtervorrichtung keinen oder einen geringen Verschmutzungsgrad aufweist. In dem Freigabezustand ist der Bypass zumindest teilweise freigegeben, sodass der Hauptvolumenstrom oder ein Teilvolumenstrom über den Bypass verläuft. Bevorzugt ist der Freigabezustand geschaltet, wenn der Strömungswiderstand hoch bzw. die Filtervorrichtung einen hohen Verschmutzungsgrad aufweist. Durch den Bypass kann somit die Betriebssicherheit weiter verbessert werden, sodass auch bei einer reduzierten Durchlässigkeit des Ölfilters eine Ölversorgung der Getriebekomponenten gewährleistet ist. Zudem kann eine Beschädigung der Filtervorrichtung aufgrund eines zu hohen Differenzdrucks zwischen Rohseite und Reinseite verhindert werden.

Erfindungsgemäß ist vorgesehen, dass die Filtervorrichtung eine Ventileinrichtung aufweist, welche zur Steuerung eines Durchflusses durch den Bypass ausgebildet und/oder geeignet ist, wobei die Ventileinrichtung bei einer Änderung des Strömungswiderstandes selbsttätig den Sperrzustand und den Freigabezustand schaltet. Insbesondere weist die Ventileinrichtung hierzu ein verstellbares Ventilelement auf, welches ab einem vorbestimmten Differenzdruck zwischen Rohseite und Reinseite von dem Sperrzustand in den Freigabezustand geschaltet wird, um die Rohseite unter Umgehung des Filtersiebes mit der Reinseite fluidtechnisch zu verbinden. Das Ventilelement ist vorzugsweise zwischen einer Sperrstellung und einer Freigabestellung bewegbar, wobei das Ventilelement in der Sperrstellung einen Durchfluss durch den Bypass verhindert und in der Freigabestellung freigibt. Vorzugsweise weist die Ventileinrichtung ein Federelement auf, welches das Ventilelement in Richtung der Sperrstellung mit einer Federkraft beaufschlagt. Es wird somit eine Filtervorrichtung vorgeschlagen, welche selbstständig einen Durchfluss des Kühlöls steuert, sodass die Betriebssicherheit weiter verbessert wird.

Erfindungsgemäß ist vorgesehen, dass das Filtersieb zur Bildung des Bypasses eine zentrale Durchgangsöffnung aufweist, wobei die Ventileinrichtung auf der Seite der Eintrittsschnittstelle, insbesondere auf der Rohseite, in die Durchgangsöffnung montiert ist. Insbesondere bildet die Durchgangsöffnung den Bypass, wobei die Durchgangsöffnung in der Sperrstellung durch das Ventilelement verschlossen und in der Freigabestellung geöffnet ist. Beispielsweise kann die Ventileinrichtung eine Führungshülse zur Führung des Ventilelements und/oder des Federelements aufweisen, wobei die Führungshülse in der Durchgangsöffnung fest montiert, z.B. eingepresst, ist. Bevorzugt weist die Führungshülse mindestens eine Bypassöffnung auf, welche in der Freigabestellung die Rohseite mit der Reinseite fluidtechnisch verbindet. Es wird somit eine Filtervorrichtung vorgeschlagen, welche sich durch einen besonders kompakten und bauraumsparenden Aufbau auszeichnet.

In einer weiteren konkreten Umsetzung ist vorgesehen, dass der Kühlölkanal einen ersten und einen zweiten Kanalabschnitt aufweist, wobei der erste Kanalabschnitt mit der Eintrittsschnittstelle und der zweite Kanalabschnitt mit der Verteilungsvorrichtung strömungstechnisch verbunden ist. Dabei sind die beiden Kanalabschnitte in einer Höhenrichtung relativ zueinander versetzt und/oder beabstandet voneinander angeordnet. Insbesondere ist zwischen den beiden Kanalabschnitten ein stufenförmiger Versatz gebildet, sodass der eine Kanalabschnitt in Strömungsrichtung betrachtet tiefer als der andere Kanalabschnitt liegt. Die beiden Kanalabschnitte sind über einen Verbindungsabschnitt strömungstechnisch miteinander verbunden, wobei die Filtervorrichtung in dem Verbindungsabschnitt angeordnet ist. Bevorzugt sind die beiden Kanalabschnitte über den Verbindungsabschnitt in vertikaler Richtung, insbesondere in einer Höhenrichtung, miteinander verbunden. Anders ausgedrückt, ist der Hauptvolumenstrom durch den Versatz zweimal, insbesondere rechtwinklig, umgelenkt. Vorzugsweise ist der Versatz durch die Länge des Verbindungsabschnitts definiert. Bevorzugt ist der Kühlölkanal durch die beiden Kanalabschnitte sowie den Verbindungsabschnitt gebildet oder mitgebildet. Durch die Anordnung der Filtervorrichtung in dem Verbindungsabschnitt kann ein direktes Auftreffen der Fremdpartikel und etwaige Beschädigungen an der Filtervorrichtung bei hohen Strömungsgeschwindigkeiten verhindert werden.

In einer weiteren Konkretisierung ist vorgesehen, dass der Verbindungsabschnitt in einer bestimmungsgemäßen Einbaulage einen Eingangsbereich und einen Ausgangsbereich aufweist, wobei der erste Kanalabschnitt in dem Eingangsbereich und der zweite Kanalabschnitt in dem Ausgangsbereich endet. Insbesondere ist der erste Kanalabschnitt in Höhenrichtung zu dem zweiten Kanalabschnitt versetzt angeordnet, wobei der zweite Kanalabschnitt höher als der erste Kanalabschnitt liegt. Bevorzugt ist der Eingangsbereich auf der Rohseite und der Ausgangsbereich auf der Reinseite angeordnet. Die Filtervorrichtung, insbesondere das Filtersieb, ist hierzu in einem zwischen dem Eingangsbereich und dem Ausgangsbereich liegenden Zwischenbereich angeordnet. Vorzugsweise ist das Filtersieb in dem Zwischenbereich abschnittsweise oder vollständig in radialer Richtung von einem Innenumfang des Verbindungsabschnitts beabstandet angeordnet, sodass das Kühlöl den Filtersieb im Bereich des radialen Abstands umströmt und die wirksame Filterfläche vergrößert wird. In einem Filterbetrieb strömt das Kühlöl von der Eintrittsschnittstelle durch den ersten Kanalabschnitt in den Eingangsbereich, über den Zwischenbereich in den Ausgangsbereich und durch den zweiten Kanalabschnitt zu der Verteilungsvorrichtung. Dabei wird der Hauptvolumenstrom in dem Eingangsbereich und in dem Ausgangsbereich umgelenkt, sodass die Filtervorrichtung von unten nach oben durchströmt wird.

In einer weiteren konstruktiven Umsetzung ist vorgesehen, dass der Verbindungsabschnitt eine verschließbare Montageöffnung aufweist, welche zur Montage der Filtervorrichtung ausgebildet und/oder geeignet ist. Insbesondere ist die Montageöffnung in dem oberen Ausgangsbereich angeordnet. Bevorzugt ist der Verbindungsabschnitt durch eine Bohrung, insbesondere eine gestufte Sacklochbohrung, gebildet, wobei die Montageöffnung durch die geöffnete Seite der Bohrung gebildet ist. Bei einer Montage kann die Filtervorrichtung, insbesondere das Filtersieb, über die Montageöffnung von außen in den Verbindungsabschnitt, insbesondere in den Zwischenbereich, eingeschoben werden und die Montageöffnung anschließend verschlossen werden. Es wird somit ein Ölsystem vorgeschlagen, welches sich durch eine besonders einfache und schnelle Montage und Demontage der Filtervorrichtung auszeichnet.

In einer weiteren Ausgestaltung ist vorgesehen, dass die Filtervorrichtung eine Befestigungseinrichtung aufweist, welche zur Befestigung des Filtersiebs ausgebildet und/oder geeignet ist, wobei das Filtersieb durch die Befestigungseinrichtung lagesicher in dem Verbindungsabschnitt gehalten ist. Insbesondere kann das Filtersieb ausschließlich über die Befestigungseinrichtung in dem Zwischenraum gehalten sein. Optional kann das Filtersieb teilweise an einer Wandung des Verbindungsabschnitts abgestützt sein. Vorzugsweise kann das Filtersieb form- und/oder kraftschlüssig, insbesondere jedoch lösbar, an der Befestigungseinrichtung montiert sein. Es wird somit eine Filtervorrichtung vorgeschlagen, welche sich durch eine sichere Montage des Filtersiebs auszeichnet.

In einer weiteren Konkretisierung ist vorgesehen, dass die Befestigungseinrichtung als ein in die Montageöffnung montierbarer Verschlussstopfen ausgebildet ist, wobei der Verschlussstopfen die Montageöffnung fluiddicht verschließt. Vorzugsweise ist der Verschlussstopfen über eine Schraubverbindung in die Montageöffnung eingeschraubt. Insbesondere weist der Verschlussstopfen einen Stützabschnitt zur Abstützung des Filtersiebes auf. Beispielsweise kann der Filtersieb über eine Schraub- und/oder Steckverbindung an dem Stützabschnitt fixiert sein. Optional weist der Verschlusstopfen einen Ölführungsabschnitt auf, welcher den Zwischenbereich mit dem oberen Ausgangsbereich und/oder dem zweiten Kanalabschnitt verbindet. Vorzugsweise verbindet der Ölführungsabschnitt die Durchgangsöffnung des Filtersiebs direkt mit dem zweiten Kanalabschnitt. Es wird somit eine Filtervorrichtung vorgeschlagen, welche sich durch einen besonders kompakten Aufbau auszeichnet und zugleich eine einfache Montage gewährleistet.

In einer Weiterbildung ist vorgesehen, dass die Filtervorrichtung eine Anzeigeeinrichtung aufweist, welche zur Anzeige einer Durchlässigkeit der Filtervorrichtung in Abhängigkeit des Strömungswiderstands ausgebildet und/oder geeignet ist. Da der Strömungswiderstand am Filtersieb proportional zu seiner Verschmutzung zunimmt, kann die Anzeigeeinrichtung aktiviert werden, wenn der Strömungswiderstand am Filtersieb einen vorbestimmten Wert erreicht. Insbesondere ist die Anzeigeeinrichtung als eine Differenzdruckanzeige, auch als "pop-up-indicator" bekannt, ausgebildet, welche basierend auf einem vorbestimmten Differenzdruck zwischen der Rohseite und der Reinseite ein Anzeigeelement, z.B. ein Anzeigestift, schaltet. Beispielsweise kann das Anzeigeelement mechanisch oder elektrisch geschaltet werden. Durch die Anzeigeeinrichtung kann somit angezeigt werden, ob das Filtersieb gereinigt oder ausgewechselt werden muss, wodurch die Wartung des Ölsystem vereinfacht wird.

In einer weiteren konkreten Ausführung ist die Anzeigeeinrichtung in die Befestigungseinrichtung, insbesondere den Verschlussstopfen, integriert. Insbesondere ist die Anzeigeeinrichtung auf einer sichtbaren Außenseite des Verschlussstopfens angeordnet. Beispielsweise kann das als Anzeigestift ausgebildete Anzeigeelement in dem Verschlussstopfen zwischen einer Grundstellung und einer Anzeigestellung geführt sein, wobei das Anzeigeelement in der Grundstellung in dem Verschlusstopfen versenkt und in der Anzeigestellung aus dem Verschlusstopfen heraussteht. Es wird somit eine besonders kompakte Filtervorrichtung vorgeschlagen, welche als vormontierte Baueinheit in den Kühlölkanal montiert werden kann.

Ein weiterer Gegenstand der Erfindung betrifft ein Getriebe für ein Luftfahrzeug mit dem Ölsystem, wie dies bereits zuvor beschrieben wurde. Das Getriebe ist ausgebildet, ein Antriebsmoment von einem oder mehreren Triebwerken und/oder mindestens einen Rotor des Luftfahrzeugs zu übersetzen. Insbesondere ist das Luftfahrzeug als ein Hubschrauber ausgebildet, wobei das Getriebe zur Übersetzung des Antriebsmoments auf den Haupt- und/oder Heckrotor ausgebildet und/oder geeignet ist. Bevorzugt ist das Getriebe als ein Zahnradgetriebe ausgebildet.

Ein weiterer Gegenstand der Erfindung betrifft ein Luftfahrzeug, insbesondere einen Hubschrauber, mit dem Ölsystem oder mit dem Getriebe, wie diese bereits zuvor beschrieben wurden.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1: eine stark schematisierte Darstellung eines Luftfahrzeugs als ein Ausführungsbeispiel der Erfindung;
- Figur 2: eine dreidimensionale Detailansicht eines Getriebes des Luftfahrzeugs gemäß Figur 1;
- Figur 3: eine schematische Schnittdarstellung durch einen Kühlölkanal eines Ölsystems des Getriebes gemäß Figur 2;
- Figur 4: eine Schnittdarstellung durch eine Filtervorrichtung für den Kühlölkanal gemäß Figur 3;
- Figur 5: die Filtervorrichtung in gleicher Darstellung wie Figur 4 in einem ersten Betriebszustand;
- Figur 6: die Filtervorrichtung in gleicher Darstellung wie Figur 4 in einem zweiten Betriebszustand;
- Figur 7: die Filtervorrichtung in gleicher Darstellung wie Figur 4 in einem dritten Betriebszustand.

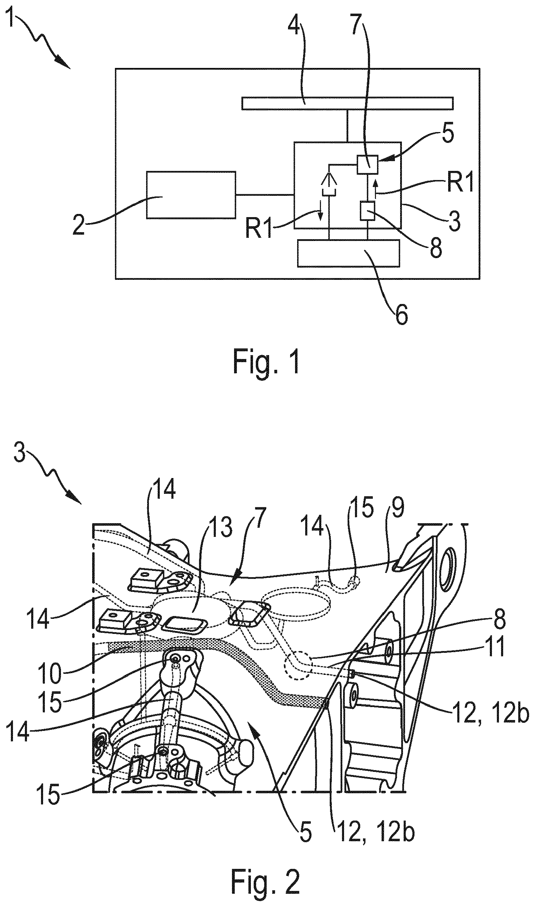

Figur 1 zeigt in einer stark schematisierten Darstellung ein Luftfahrzeug 1, vorzugsweise einen Hubschrauber, als ein Ausführungsbeispiel der Erfindung. Das Luftfahrzeug 1 weist einen Antriebsmotor 2 zur Erzeugung eines Antriebsmoments sowie ein Getriebe 3 zur Übersetzung des Antriebsmoments auf mindestens einen Rotor 4 des Luftfahrzeugs 1 auf. Der Antriebsmotor 2 ist hierzu über das Getriebe 3 getriebetechnisch mit dem mindestens einen Rotor 4 verbunden.

Das Getriebe 3 weist ein Ölsystem 5 auf, welches zur Schmierung und Kühlung des Getriebes 3 dient. Hierzu weist das Getriebe 3 einen Ölkreislauf auf, über welchen ein Getriebeöl in dem Getriebe 3 in einer Strömungsrichtung R1 zirkuliert. In den Ölkreislauf ist eine Ölkühlervorrichtung 6 eingebunden, welche zur Kühlung des Öls dient. Hierzu wird ein Heißöl aus dem Getriebe 3 zu der Ölkühlervorrichtung 6 gefördert, gekühlt und als Kühlöl wieder dem Getriebe 3 zugeführt.

Das Ölsystem 5 weist eine Verteilungsvorrichtung 7 auf, welche ausgebildet ist, das Kühlöl in dem Getriebe 3 zu verteilen. Insbesondere wird das Kühlöl über die Verteilungsvorrichtung 7 in dem Getriebe 3 verteilt und anschließend wieder der Ölkühlervorrichtung 6 zugeführt. Beispielsweise kann das Ölsystem 5 mindestens eine Ölpumpe, nicht dargestellt, aufweisen, welche zur Förderung des Öls in den Ölkreislauf, z.B. in Strömungsrichtung R1 vor der Ölkühlervorrichtung 6, eingebunden ist.

Das Ölsystem 5 weist zudem eine Filtervorrichtung 8 zur Filtrierung von Fremdpartikeln aus dem Kühlöl auf. Die Filtervorrichtung 8 ist hierzu in der Strömungsrichtung R1 zwischen der Ölkühlervorrichtung 6 und der Verteilungsvorrichtung 7 angeordnet.

Figur 2 zeigt einen Teilabschnitt des Getriebes 3 in einer dreidimensionalen Darstellung. Das Getriebe 3 weist einen Gehäuseabschnitt 9 auf, wobei der Gehäuseabschnitt 9 einen Heißölkanal 10 zur Führung von Heißöl und einen Kühlölkanal 11 zur Führung von Kühlöl aufweist. Beispielsweise sind der Heißölkanal 10 und der Kühlölkanal 11 durch ein oder mehrere in dem Gehäuseabschnitt 9 angeordnete Bohrungen gebildet.

Das Ölsystem 5 weist einen Ölkühleranschluss 12 auf, über welchen die Ölkühlervorrichtung 6 an den Heißölkanal 10 und den Kühlölkanal 11 angeschlossen werden kann. Hierzu weist das Ölsystem 5 eine Austrittsschnittstelle 12a und eine Eintrittsschnittelle 12b auf, wobei der Heißölkanal 10 mit der Austrittschnittstelle 12a und der Kühlölkanal 11 mit der Eintrittsschnittelle 12b strömungstechnisch verbunden ist. Beispielsweise sind die Austrittsschnittstelle 12a und die Eintrittsschnittelle 12b auf einer gemeinsamen Seite des Gehäuseabschnitts 9 und/oder benachbart zueinander angeordnet. Die Ölkühlervorrichtung 6 ist über entsprechende Anschlüsse an die Austrittsschnittstelle 12a und die Eintrittsschnittstelle 12b anschließbar, sodass das Heißöl über die Austrittsschnittstelle 12a in die Ölkühlervorrichtung 6 strömt, gekühlt wird und über die Eintrittsschnittstelle 12b als das Kühlöl wieder in das Getriebe 3 zurückströmt.

Die Verteilungsvorrichtung 7 weist einen Sammelbereich 13 auf, in welchem das Kühlöl gesammelt und über mehrere Verteilungskanäle 14 in dem Getriebe 3 verteilt wird. Der Kühlölkanal 11 verbindet dabei die Eintrittsschnittstelle 12b mit dem Sammelbereich 13, wobei die Verteilungskanäle 14 das Kühlöl ausgehend von dem Sammelbereich 13 zu jeweils mindestens einer Kühl- und Schmierstelle 15 in dem Getriebe 3 leiten, um das Kühlöl gezielt in dem Getriebe 3 zu verteilen.

Die Filtervorrichtung 8, hier nur schematisch angedeutet, ist dabei zwischen der Eintrittsschnittstelle 12b und der Verteilungsvorrichtung 7 in den Kühlölkanal 11 integriert, sodass etwaige Fremdpartikel frühzeitig, insbesondere vor dem Eintritt in den Sammelbereich 13, aus dem Kühlöl herausgefiltert werden.

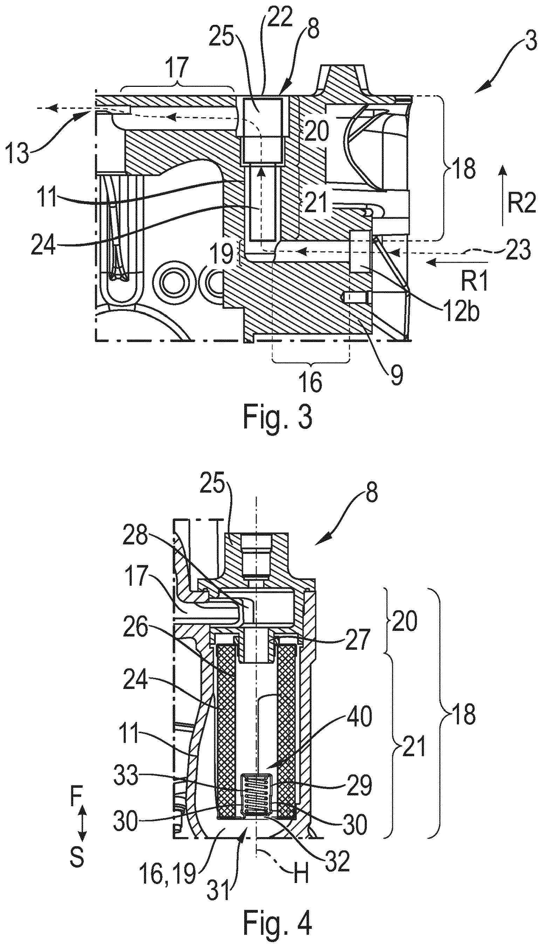

Die Figur 3 zeigt den Kühlkanal 11 mit der Filtervorrichtung 8 in einer schematischen Schnittdarstellung. Der Kühlkanal 11 weist einen ersten und einen zweiten Kanalabschnitt 16, 17 auf, welche in einer Höhenrichtung R2 relativ zueinander versetzt und über einen Verbindungsabschnitt 18 strömungstechnisch miteinander verbunden sind. Zwischen den beiden Kanalabschnitten 16, 17 ist somit ein Höhenversatz gebildet, wobei der erste Kanalabschnitt 16 in einer bestimmungsgemäßen Einbaulage des Getriebes 2 tiefer als der zweite Kanalabschnitt 17 liegt.

Der Verbindungsabschnitt 18 ist in einen unteren Eingangsbereich 19, einen oberen Ausgangsbereich 20 und einen zwischen Eingangs- und Ausgangsbereich 20 liegenden Zwischenbereich 21 unterteilt. Dabei verbindet der erste Kanalabschnitt 16 die Eintrittsschnittelle 12b mit dem unteren Eingangsbereich 19 und der zweite Kanalabschnitt 20 den oberen Ausgangsbereich 20 mit der Verteilungsvorrichtung 7, insbesondere deren Sammelbereich 13.

Der Verbindungsabschnitt 18 weist eine Montageöffnung 22 auf, welche durch eine zu einer Außenseite des Getriebes 2 geöffnete Bohrung gebildet ist. Die Filtervorrichtung 8 ist über die Montageöffnung 22 in den Verbindungsabschnitt 18 montiert, wobei ein Hauptvolumenstrom 23 des Kühlöls von dem ersten Kanalabschnitt 16 über die Filtervorrichtung 8 zu dem zweiten Kanalabschnitt 17 verläuft. Der Hauptvolumenstrom 23 ist dabei jeweils in dem unteren Eingangsbereich 19 und dem oberen Ausgangsbereich 20 umgelenkt.

Um ein Verstopfen einzelner Verteilungskanäle 14 mit Fremdpartikeln, wie z.B. Späne oder Verunreinigungen aus der Ölkühlervorrichtung 6, zu verhindern, weist die Filtervorrichtung 8 ein Filtersieb 24 auf. Das aus der Ölkühlervorrichtung 6 kommende Öl wird über das Filtersieb 24 geleitet, gefiltert und fließt weiter zu dem Sammelbereich 13, wo das gefilterte Öl auf die verschiedenen Verteilungskanäle 14 verteilt wird. Der Durchmesser der Verteilungskanäle 14 beträgt ca. 1 mm, weshalb die zu filternden Fremdpartikel eine maximale Partikelgröße von größer als 0,8 mm nicht überschreiten sollten. Das Filtersieb 24 weist daher beispielsweise eine Maschenweite von weniger als 0,6 mm auf, um Fremdpartikel mit einem Durchmesser von mehr als 0,6 mm zu filtern.

Ferner weist die Filtervorrichtung 8 eine Befestigungsvorrichtung 25 auf, wobei der Filtersieb 24 über die Befestigungsvorrichtung 25 lagesicher in dem Zwischenbereich 21 fixiert ist. Die Befestigungsvorrichtung 25 ist beispielsweise als ein Verschlussstopfen ausgebildet, welcher über die Montageöffnung 22 in den oberen Ausgangsbereich 20 eingeschraubt ist und den Verbindungsabschnitt 18 nach außen hin fluiddicht abdichtet.

Figur 4 zeigt eine Schnittdarstellung der Filtervorrichtung 8 in einer Einbausituation. Das Filtersieb 24 ist als ein zylinderförmiger Siebeinsatz mit einer zentralen Durchgangsöffnung 26 ausgebildet, welche das Filtersieb 24 in axialer Richtung in Bezug auf eine Hauptachse H durchsetzt. Beispielsweise ist die Hauptachse H durch eine Längsachse des Filtersiebs 24 definiert.

Die Befestigungseinrichtung 25 weist einen Stützabschnitt 27 auf, welcher sich in axialer Richtung in Bezug auf die Hauptachse H in Richtung des Filtersiebs 24 erstreckt. Der Stützabschnitt 27 weist eine zylindrische Form auf, wobei das Filtersieb 24 über die Durchgangsöffnung 26 auf den Stützabschnitt 27, vorzugsweise form- und/oder kraftschlüssig, aufgesteckt ist. Prinzipiell kann das Filtersieb 24 ausschließlich über den Stützabschnitt 27 in dem Zwischenraum 21 gehalten sein. Optional ergänzend kann das Filtersieb 24 jedoch auch zusätzlich in axialer Richtung auf einer der Befestigungseinrichtung 25 gegenüberliegenden Seite an dem Verbindungsabschnitt 21 abgestützt sein, sodass das Filtersieb 24 axial in Bezug auf die Hauptachse H formschlüssig gehalten ist.

Die Befestigungseinrichtung 25 weist zudem einen Ölführungsabschnitt 28 auf, welcher die Durchgangsöffnung 26 strömungstechnisch mit dem zweiten Kanalabschnitt 17 verbindet und zur Durchführung des Kühlöls durch die Befestigungseinrichtung 25, insbesondere in dem oberen Ausgangsbereich 20, dient. Der Ölführungsabschnitt 28 ist hierzu koaxial in den Stützabschnitt 27 eingebracht und durchsetzt den Verschlusstopfen in Richtung des zweiten Kanalabschnitts 17.

Die Filtervorrichtung 8 weist zudem einen Bypass 40 auf, welcher eine Rohseite und eine Reinseite unter Umgehung des Filtersiebs 24 strömungstechnisch miteinander verbindet. Die Rohseite ist dabei durch die Seite des Filtersiebs 24 definiert, an welcher das Kühlöl ungefiltert vorliegt. Die Reinseite ist durch die Seite des Filtersiebs 24 definiert, an welcher das Kühlöl gefiltert vorliegt. Der Bypass 40 ist dabei durch die Durchgangsöffnung 26 gebildet, wobei der Bypass 40 in Abhängigkeit eines Strömungswiderstands des Filtersiebes 24 zwischen einem Sperrzustand und einem Freigabezustand schaltbar ist.

Hierzu weist Filtervorrichtung 8 eine Ventileinrichtung 31 zur Steuerung des Durchflusses durch den Bypass 40 auf. Die Ventileinrichtung 31 umfasst eine Führungshülse 29 mit mindestens einer Bypassöffnung 30 sowie ein Ventilelement 32 und ein Federelement 33 auf, welche innerhalb der Führungshülse 29 angeordnet sind. Die Führungshülse 29 ist endseitig, insbesondere auf der Seite des Eingangsbereichs 19, in die Durchgangsöffnung 26 montiert.

Das Ventilelement 32 ist zwischen einer Sperrstellung S und einer Freigabestellung F verstellbar, wobei das Ventilelement 32 in der Sperrstellung S die Bypassöffnung 30 sperrt und in der Freigabestellung F zumindest teilweise freigibt. Das Federelement 33 ist hierzu in axialer Richtung einerseits an der Hülse 30 und andererseits an dem Ventilelement 32 abgestützt, wobei das Federelement 33 das Ventilelement in Richtung der Sperrstellung S mit einer Federkraft beaufschlagt und in einen Ventilsitz drückt.

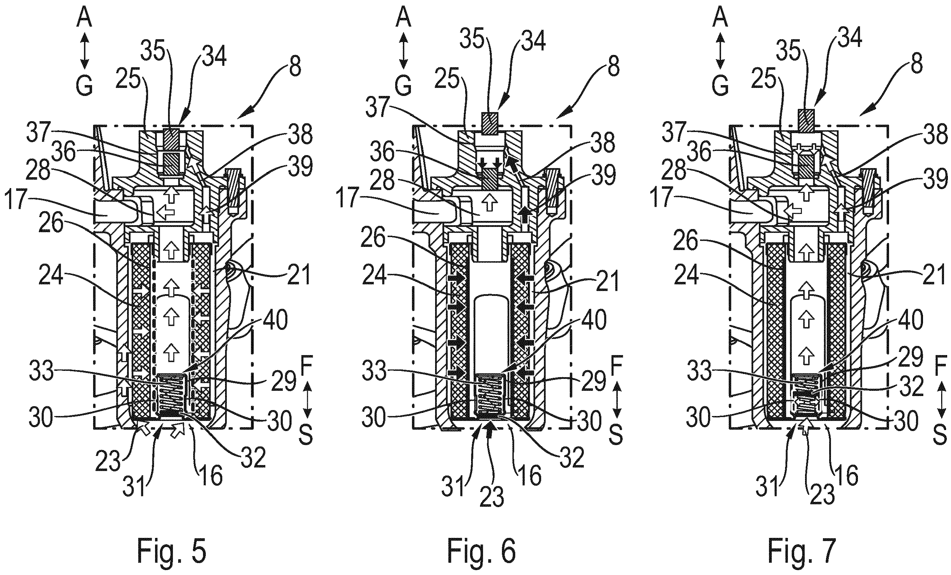

Die Figuren 5 bis 7 zeigen jeweils die Filtervorrichtung 8 gemäß Figur 4 in unterschiedlichen Betriebszuständen eines Filterbetriebs. Die Filtervorrichtung 8 weist in diesem Ausführungsbeispiel zusätzlich eine Anzeigeeinrichtung 34, welche zur Anzeige eines Verschmutzungsgrades des Filtersiebs 24 ausgebildet ist. Die Anzeigeeinrichtung 34 ist hierzu als eine Differenzdruckanzeige ausgebildet, wobei die Anzeigeeinrichtung 34 basierend auf einem zwischen der Rohseite und der Reinseite vorbestimmten Differenzdruck eine Verschmutzung des Filtersiebs 24 anzeigt.

Hierzu weist die Anzeigeeinrichtung 34 einen Anzeigestift 35 und einen Steuerkolben 36 auf, welche in axialer Richtung in Bezug auf die Hauptachse H relativ zueinander in einem Führungsabschnitt 37 der Befestigungseinrichtung 25 bewegbar angeordnet sind. Der Anzeigestift 35 ist dabei zwischen einer Grundstellung G und einer Anzeigestellung A verstellbar, wobei der Anzeigestift 35 in der Grundstellung G, wie in Figur 5 gezeigt, vollständig in dem Führungsabschnitt 37 eingefahren ist und in der Anzeigestellung A, wie in den Figuren 6 und 7 gezeigt, zumindest teilweise aus dem Führungsabschnitt 37 ausgefahren ist. Beispielweise weist der Steuerkolben 36 einen Magneten auf, wobei der Anzeigestift 35 ferromagnetisch ist und durch den Magneten in der Grundstellung G gehalten ist. Der Führungsabschnitt 37 ist einerseits mit dem Ölführungsabschnitt 28 bzw. der Reinseite und andererseits über einen Nebenströmungskanal 38 mit dem Zwischenraum 21 bzw. der Rohseite strömungstechnisch verbunden.

In einem regulären Filterbetrieb, wie in Figur 5 gezeigt, verläuft der Hauptvolumenstrom 23 von dem ersten Kanalabschnitt 16 über das Filtersieb 24 zu dem zweiten Kanalabschnitt 17, wobei mitgeführte Fremdpartikel aus dem Kühlöl herausgefiltert werden. Insbesondere verläuft der Hauptvolumenstrom 23 dabei von dem ersten Kanalabschnitt 16 über das Filtersieb 24 in die Durchgangsbohrung 26 und über den Ölführungsabschnitt 28 zu dem zweiten Kanalabschnitt 17. Parallel hierzu verläuft ein Nebenvolumenstrom 39 von dem Zwischenbereich 21 über den Nebenströmungskanal 38 in den Führungsabschnitt 37.

Bei einer Verschmutzung des Filtersiebes 24, wie in Figur 6 gezeigt, steigt der Strömungswiderstand des Filtersiebes 24 proportional zu seinem Verschmutzungsgrad, sodass der Druck auf der Rohseite zunimmt und auf der Reinseite abnimmt. Bei Erreichen eines vorbestimmten Differenzdrucks wird der Steuerkolben 36 axial in Richtung des Ölführungsabschnitts 28 verschoben, wodurch sich die Anziehungskraft zwischen dem Magneten und dem Anzeigestift 35 verringert, sodass der Anzeigestift 35 in Richtung der Anzeigestellung A bewegt wird und eine Verschmutzung des Filtersiebs 24 angezeigt wird.

Bei einem zunehmenden Verschmutzungsgrads des Filtersiebs 24 kann eine ausreichende Ölversorgung des Getriebes 3 nicht mehr gewährleistet werden, sodass ab einem vorbestimmten Differenzdruck der Bypass 40 in den Freigabezustand geschaltet wird, wie dies in Figur 7 dargestellt ist. Ist ein auf das Ventilelement 32 wirkender Fluiddruck auf der Rohseite größer als die auf das Ventilelement 32 wirkende Federkraft des Federelements 33, wird das Ventilelement 32 von der Sperrstellung S in Richtung der Freigabestellung F bewegt. Dadurch wird die Bypassöffnung 30 freigegeben, sodass der Hauptvolumenstrom 23 oder zumindest ein Teilvolumenstrom des Kühlöls von dem ersten Kanalabschnitt 16 über den Bypass 40 unter Umgehung des Filtersiebs 24 zu dem zweiten Kanalabschnitt 17 verläuft. Wenn der Differenzdruck sinkt, kehrt der Steuerkolben 37 in seine ursprüngliche Position zurück, wobei der Anzeigestift 35 in der Anzeigestellung A verbleibt, sodass weiterhin eine Verschmutzung des Filtersiebes 24 angezeigt wird.

Durch die Filtervorrichtung 8 wird somit die Betriebssicherheit des Getriebes 3 erhöht, indem Fremdpartikel aus dem Kühlöl frühzeitig herausgefiltert werden und zugleich eine ausreichende Ölversorgung der Getriebekomponenten bei steigendem Verschmutzungsgrad des Filtersiebs 24 sichergestellt wird.

### Bezugszeichen

- 1: Luftfahrzeug
- 2: Antriebsmotor
- 3: Getriebe
- 4: Rotor
- 5: Ölsystem
- 6: Ölkühlervorrichtung
- 7: Verteilungsvorrichtung
- 8: Filtervorrichtung
- 9: Gehäuseabschnitt
- 10: Heißölkanal
- 11: Kühlölkanal
- 12: Ölkühleranschluss
- 12a: Eintrittsschnittstelle
- 12b: Austrittsschnittstelle
- 13: Sammelbereich
- 14: Verteilungskanäle
- 15: Kühl-und Schmierstellen
- 16: erster Kanalabschnitt
- 17: zweiter Kanalabschnitt
- 18: Verbindungsabschnitt
- 19: Eingangsbereich
- 20: Ausgangsbereich
- 21: Zwischenbereich
- 22: Montageöffnung
- 23: Hauptvolumenstrom
- 24: Filtersieb
- 25: Befestigungseinrichtung
- 26: Durchgangsöffnung
- 27: Stützabschnitt
- 28: Ölführungsabschnitt
- 29: Hülse
- 30: Bypassöffnung
- 31: Ventileinrichtung
- 32: Ventilelement
- 33: Federelement
- 34: Anzeigeeinrichtung
- 35: Anzeigestift
- 36: Steuerkolben
- 37: Führungsabschnitt
- 38: Nebenströmungskanal
- 39: Nebenvolumenstrom
- 40: Bypass

- A: Anzeigestellung
- F: Freigabestellung
- G: Grundstellung
- H: Hauptachse
- R1: Strömungsrichtung
- R2: Höhenrichtung
- S: Sperrstellung

## Patentansprüche

1. Ölsystem (5) für ein Getriebe (3),
- mit einem Heißölkanal (10) zur Führung von Heißöl,
- mit einem Kühlölkanal (11) zur Führung von Kühlöl,
- mit einer Verteilungsvorrichtung (7) zur Verteilung von Kühlöl in dem Getriebe (3), wobei die Verteilungsvorrichtung (7) strömungstechnisch mit dem Kühlölkanal (11) verbunden ist,
- mit einem Ölkühleranschluss (12) zum Anschluss einer Ölkühlervorrichtung (6), wobei der Ölkühleranschluss (12) eine mit dem Heißölkanal (10) in Verbindung stehende Austrittsschnittstelle (12a) zum Austritt des Heißöls aus dem Getriebe (3) und eine mit dem Kühlölkanal (11) in Verbindung stehende Eintrittsschnittstelle (12b) zum Eintritt des Kühlöls in das Getriebe (3) aufweist,
- mit einer zwischen der Verteilungsvorrichtung (7) und der Eintrittsschnittstelle (12b) angeordneten Filtervorrichtung (8) zur Filtrierung von in dem Kühlöl angeordneten Fremdpartikeln, wobei die Filtervorrichtung (8) ein Filtersieb (24) aufweist, wobei das Filtersieb (24) in dem Kühlölkanal (11) angeordnet ist, wobei Filtervorrichtung (8) einen Bypass (40) aufweist, wobei der Bypass (40) in Abhängigkeit eines Strömungswiderstandes zwischen einem Sperr- und einem Freigabezustand schaltbar ist, wobei die Filtervorrichtung (8) eine Ventileinrichtung (31) zur Steuerung eines Durchflusses durch den Bypass (40) aufweist, wobei die Ventileinrichtung (31) bei einer Änderung des Strömungswiderstandes selbsttätig den Sperrzustand und den Freigabezustand schaltet,
**dadurch gekennzeichnet, dass**
das Filtersieb (24) zur Bildung des Bypasses (40) eine zentrale Durchgangsöffnung (26) aufweist, wobei die Ventileinrichtung (31) eingangsseitig in die Durchgangsöffnung (26) montiert ist.

2. Ölsystem (5) nach Anspruch 1, **dadurch gekennzeichnet, dass** das Filtersieb (24) als ein Grobsieb mit einer Maschenweite von kleiner als 0,8 mm ausgebildet ist.

3. Ölsystem (5) nach Anspruch 1 oder 2, **dadurch gekennzeichnet, dass** der Kühlölkanal (11) einen ersten und einen zweiten Kanalabschnitt (16, 17) aufweist, wobei der erste Kanalabschnitt (16) mit der Eintrittsschnittstelle (12b) und der zweite Kanalabschnitt (17) mit der Verteilungsvorrichtung (7) strömungstechnisch verbunden ist, wobei der erste und der zweite Kanalabschnitt (16, 17) relativ zueinander versetzt sind und über einen Verbindungsabschnitt (18) strömungstechnisch miteinander verbunden sind, wobei die Filtervorrichtung (8) in dem Verbindungsabschnitt (18) angeordnet ist.

4. Ölsystem (5) nach Anspruch 3, **dadurch gekennzeichnet, dass** der Verbindungsabschnitt (18) einen Eingangsbereich (19) und einen Ausgangsbereich (20) aufweist, wobei der erste Kanalabschnitt (16) in dem Eingangsbereich (19) endet und der zweite Kanalabschnitt (17) in dem Ausgangsbereich (20) endet, wobei die Filtervorrichtung (8) in einem Zwischenbereich (21) zwischen dem Eingangsbereich (19) und dem Ausgangsbereich (20) angeordnet ist.

5. Ölsystem (5) nach Anspruch 3 oder 4, **dadurch gekennzeichnet, dass** der Verbindungsabschnitt (18) eine verschließbare Montageöffnung (22) zur Montage der Filtervorrichtung (8) aufweist, wobei die Filtervorrichtung (8) über die Montageöffnung (22) in den Verbindungsabschnitt (18) montierbar und/oder montiert ist.

6. Ölsystem (5) nach einem der Ansprüche 4 bis 5, **dadurch gekennzeichnet, dass** die Filtervorrichtung (8) eine Befestigungseinrichtung (25) zur Befestigung des Filtersiebs (24) aufweist, wobei das Filtersieb (24) durch die Befestigungseinrichtung (25) lagesicher in dem Verbindungsabschnitt (18) gehalten ist.

7. Ölsystem (5) nach Anspruch 6, **dadurch gekennzeichnet, dass** die Befestigungseinrichtung (25) als ein in die Montageöffnung (22) montierbarer Verschlussstopfen ausgebildet ist, welcher die Montageöffnung (22) fluiddicht verschließt.

8. Ölsystem (5) nach einem der vorhergehenden Ansprüche, **dadurch gekennzeichnet, dass** die Filtervorrichtung (8) eine Anzeigeeinrichtung (34) aufweist, wobei die Anzeigeeinrichtung (34) ausgebildet ist, in Abhängigkeit eines Strömungswiderstands einen Verschmutzungsgrad der Filtervorrichtung (8) anzuzeigen.

9. Ölsystem (5) nach Anspruch 6 und 8, **dadurch gekennzeichnet, dass** die Anzeigeeinrichtung (34) in die Befestigungseinrichtung (25) integriert ist.

10. Getriebe (3) zur Übersetzung eines Antriebsmoments von einem Antriebsmotor (2) auf mindestens einen Rotor (4) eines Luftfahrzeuges (1), **gekennzeichnet durch** ein Ölsystem (5) nach einem der vorhergehenden Ansprüche.

11. Luftfahrzeug (1) entweder mit dem Ölsystem (5) nach einem der Ansprüche 1 bis 13 oder mit dem Getriebe (3) nach Anspruch 10.

## Claims

1. An oil system (5) for a gearbox (3),
- with a hot oil duct (10) for guiding hot oil,
- with a cooling oil duct (11) for guiding cooling oil,
- with a distribution device (7) for distributing cooling oil in the gearbox (3), wherein the distribution device (7) is fluidically connected to the cooling oil channel (11),
- with an oil cooler connection (12) for connecting an oil cooler device (6), wherein the oil cooler connection (12) comprises an outlet interface (12a) which is connected to the hot oil duct (10) for the exit of the hot oil from the gearbox (3), and an inlet interface (12b) which is connected to the cooling oil duct (11) for the entry of the cooling oil into the gearbox (3),
- with a filter device (8) disposed between the distribution device (7) and the inlet interface (12b) in order to filter foreign particles disposed in the cooling oil, wherein the filter device (8) comprises a filter screen (24), wherein the filter screen (24) is disposed in the cooling oil channel (11), wherein the filter device (8) comprises a bypass (40), wherein the bypass (40) can be switched between a blocking state and a release state as a function of a flow resistance, wherein the filter device (8) comprises a valve device (31) for controlling a flow through the bypass (40), wherein the valve device (31) automatically switches the blocking state and the release state when the flow resistance changes,
**characterised in that**
in order to form the bypass (40), the filter screen (24) comprises a central passage opening (26), wherein the valve device (31) is installed into the passage opening (26) on the inlet side.

2. The oil system (5) as claimed in claim 1, **characterised in that** the filter screen (24) is adapted as a coarse screen with a mesh size of less than 0.8 mm.

3. The oil system (5) as claimed in claim 1 or claim 2, **characterised in that** the cooling oil duct (11) comprises a first and a second duct section (16, 17), wherein the first duct section (16) is fluidically connected to the inlet interface (12b) and the second duct section (17) is fluidically connected to the distribution device (7), wherein the first and the second duct sections (16, 17) are offset relative to one another and are fluidically connected to one another via a connecting section (18), wherein the filter device (8) is disposed in the connecting section (18).

4. The oil system (5) as claimed in claim 3, **characterised in that** the connecting section (18) comprises an inlet area(19) and an outlet area(20), wherein the first channel section (16) ends in the inlet area(19) and the second channel section (17) ends in the outlet area(20), wherein the filter device (8) is disposed in an intermediate area(21) between the inlet area(19) and the outlet area(20).

5. The oil system (5) as claimed in claim 3 or claim 4, **characterised in that** the connecting section (18) comprises a closable installation opening (22) for the installation of the filter device (8), wherein the filter device (8) can be installed and/or is installed into the connecting section (18) via the installation opening (22).

6. The oil system (5) as claimed in one of claims 4 to 5, **characterised in that** the filter device (8) comprises a fastening device (25) for fastening the filter screen (24), wherein the filter screen (24) is securely held in position in the connecting section (18) by the fastening device (25).

7. The oil system (5) as claimed in claim 6, **characterised in that** the fastening device (25) is adapted as a sealing plug which can be installed in the installation opening (22) and which closes the installation opening (22) in a fluid-tight manner.

8. The oil system (5) as claimed in one of the preceding claims, **characterised in that** the filter device (8) comprises a display device (34), wherein the display device (34) is adapted to display a degree of soiling of the filter device (8) as a function of a flow resistance.

9. The oil system (5) as claimed in claim 6 and claim 8, **characterised in that** the display device (34) is integrated into the fastening device (25).

10. A gearbox (3) for transmitting a drive torque from a propulsion engine (2) to at least one rotor (4) of an aircraft (1), **characterised by** an oil system (5) as claimed in one of the preceding claims.

11. An aircraft (1) with either the oil system (5) as claimed in one of claims 1 to 13 or with the gearbox (3) as claimed in claim 10.

## Revendications

1. Système d'huile (5) pour une boîte de vitesses (3),
avec un canal d'huile chaude (10) pour guider de l'huile chaude,
avec un canal d'huile de refroidissement (11) pour guider de l'huile de refroidissement,
avec un dispositif de distribution (7) pour une distribution de l'huile de refroidissement dans la boîte de vitesses (3), le dispositif de distribution (7) étant relié de manière fluidique au canal d'huile de refroidissement (11),
avec un raccord de refroidisseur d'huile (12) pour raccorder un dispositif refroidisseur d'huile (6), dans lequel le raccord de refroidisseur d'huile (12) présente une interface de sortie (12a) communiquant avec le canal d'huile chaude (10) pour la sortie de l'huile chaude à partir de la boîte de vitesses (3) et une interface d'entrée (12b) communiquant avec le canal d'huile de refroidissement (11) pour l'entrée de l'huile de refroidissement dans la boîte de vitesse (3),
avec un dispositif filtrant (8) agencé entre le dispositif de distribution (7) et l'interface d'entrée (12b) pour filtrer les particules étrangères présentes dans l'huile de refroidissement, dans lequel le dispositif filtrant (8) présente un tamis filtrant (24), dans lequel le tamis filtrant (24) est agencé dans le canal d'huile de refroidissement (11), dans lequel le dispositif filtrant (8) présente une dérivation (40), dans lequel la dérivation (40) peut être commutée entre un état de blocage et un état de libération en fonction d'une résistance à l'écoulement, dans lequel le dispositif filtrant (8) présente un dispositif de vanne (31) pour commander un écoulement à travers la dérivation(40), dans lequel le dispositif de vanne (31) commute automatiquement l'état de blocage et l'état de libération en cas de modification de la résistance à l'écoulement,
**caractérisé en ce que**
le tamis filtrant (24) présente une ouverture de passage centrale (26) pour former la dérivation (40), le dispositif de vanne (31) étant monté côté entrée dans l'ouverture de passage (26).

2. Système d'huile (5) selon la revendication 1, **caractérisé en ce que** le tamis filtrant (24) est réalisé sous la forme d'un tamis grossier d'une largeur de maille inférieure à 0,8 mm.

3. Système d'huile (5) selon la revendication 1 ou 2, **caractérisé en ce que** le canal d'huile de refroidissement (11) présente une première et une seconde section de canal (16, 17), dans lequel la première section de canal (16) est reliée de manière fluidique à l'interface d'entrée (12b) et la seconde section de canal (17) au dispositif de distribution (7), dans lequel les première et seconde sections de canal (16, 17) sont décalées l'une par rapport à l'autre et sont reliées de manière fluidique l'une à l'autre par une section de liaison (18), dans lequel le dispositif filtrant (8) est disposé dans la section de liaison (18).

4. Système d'huile (5) selon la revendication 3, **caractérisé en ce que** la section de liaison (18) présente une zone d'entrée (19) et une zone de sortie (20), dans lequel la première section de canal (16) se termine dans la zone d'entrée (19) et la seconde section de canal (17) se termine dans la zone de sortie (20), dans lequel le dispositif filtrant (8) est agencé dans une zone intermédiaire (21) entre la zone d'entrée (19) et la zone de sortie (20).

5. Système d'huile (5) selon la revendication 3 ou 4, **caractérisé en ce que** la section de liaison (18) présente une ouverture de montage (22) pouvant être fermée pour le montage du dispositif filtrant (8), dans lequel le dispositif filtrant (8) peut être monté et/ou est monté dans la section de liaison (18) via l'ouverture de montage (22).

6. Système d'huile (5) selon l'une quelconque des revendications 4 à 5, **caractérisé en ce que** le dispositif filtrant (8) présente un dispositif de fixation (25) pour fixer le tamis filtrant (24), le tamis filtrant (24) étant maintenu de manière fiable dans la section de liaison (18) par le dispositif de fixation (25).

7. Système d'huile (5) selon la revendication 6, **caractérisé en ce que** le dispositif de fixation (25) est réalisé sous la forme d'un bouchon de fermeture pouvant être monté dans l'ouverture de montage (22), qui ferme l'ouverture de montage (22) de manière étanche aux fluides.

8. Système d'huile (5) selon l'une quelconque des revendications précédentes, **caractérisé en ce que** le dispositif filtrant (8) présente un dispositif d'affichage (34), le dispositif d'affichage (34) étant conçu pour afficher un degré de contamination du dispositif filtrant (8) en fonction d'une résistance à l'écoulement.

9. Système d'huile (5) selon les revendications 6 et 8, **caractérisé en ce que** le dispositif d'affichage (34) est intégré dans le dispositif de fixation (25).

10. Boîte de vitesses (3) pour la transmission d'un couple d'entraînement d'un moteur d'entraînement (2) à au moins un rotor (4) d'un aéronef (1), **caractérisée par** un système d'huile (5) selon l'une quelconque des revendications précédentes.

11. Aéronef (1) doté du système d'huile (5) selon l'une quelconque des revendications 1 à 13, et/ou de la boîte de vitesses (3) selon la revendication 10.
